# EUROPÄISCHE PATENTANMELDUNG

(11) **EP 3 933 442 A1**
(43) Veröffentlichungstag der Anmeldung: **05.01.2022**
(21) Anmeldenummer: 20182952.0
(22) Anmeldetag: 29.06.2020
(51) Int. Cl.: G01S 17/894, G01S 17/42, G01S 7/481, G01S 7/4863

(54) **SENSOR ZUM DREIDIMENSIONALEN OPTISCHEN VERMESSEN EINES OBJEKTS**

(71) Anmelder: Pepperl+Fuchs AG, 68307 Mannheim (DE)
(72) Erfinder: KEGEL, Gunther, 68307 Mannheim (DE); NEDDERMEYER, Werner, 68307 Mannheim (DE); TABEL, Ernst, 12277 Berlin (DE)
(74) Vertreter: Schiffer, Axel Martin

(57) **Zusammenfassung**

Die vorliegende Erfindung betrifft einen Sensor zum dreidimensionalen optischen Vermessen eines Objekts in einem Überwachungsbereich mit einem Lichtsender zum Aussenden von Sendelichtpulsen, mit einer Detektionseinheit zum Nachweisen von aus dem Überwachungsbereich von einem zu vermessenden Objekt zurückgestrahlten Lichtpulsen, wobei zum Lenken der Sendelichtpulse in unterschiedliche Senderichtungen eine dem Lichtsender nachgeordnete zweiachsige Scaneinheit vorhanden ist, und mit einer Steuer- und Auswerteeinheit zum Ansteuern des Lichtsenders und der Scaneinheit und zum Auswerten der von der Detektionseinheit nachgewiesenen Lichtpulse. Der Sensor ist erfindungsgemäß dadurch gekennzeichnet, dass die Detektionseinheit zum Nachweisen von zurückgestrahlten Lichtpulsen aus unterschiedlichen Raumrichtungen mehrere Einzeldetektoren aufweist.

## Beschreibung

Die Erfindung betrifft einen Sensor zum dreidimensionalen Vermessen eines Objekts in einem Überwachungsbereich nach dem Oberbegriff des Anspruchs 1.

Ein gattungsgemäßer Sensor ist beispielsweise beschrieben in https://www.isit.fraunhofer.de/de/mems-anwendungen/optische-systeme/3d-kamera.html und weist folgende Komponenten auf: Einen Lichtsender zum Aussenden von Sendelicht, insbesondere von Sendelichtpulsen, eine Detektionseinheit zum Nachweisen von aus dem Überwachungsbereich von einem zu vermessenden Objekt zurückgestrahltem Lichtpulsen, insbesondere von zurückgestrahlten Lichtpulsen, wobei zum Lenken der Sendelichtpulse in unterschiedliche Senderichtungen eine dem Lichtsender nachgeordnete zweiachsige Scaneinheit vorhanden ist, und eine Steuer- und Auswerteeinheit zum Ansteuern des Lichtsenders und der Scaneinheit und zum Auswerten des von der Detektionseinheit nachgewiesenen Lichts oder der nachgewiesenen Lichtpulse.

Die Erfindung betrifft allgemein elektrooptische Entfernungsmessgeräte zur dreidimensionalen oder räumlichen Vermessung, also Vorrichtungen zur dreidimensionalen Distanzmessung, insbesondere für die Objekterkennung.

Elektrooptische dreidimensionale Entfernungsmessgeräte kommen für viele Anwendungen zum Einsatz. Dies gilt insbesondere für solche elektrooptische dreidimensionale Entfernungsmesser, die nach dem sogenannten Flugzeit-Verfahren ("Time of Flight", ToF) arbeiten. Das sind Geräte, die zur Bestimmung einer Distanz die Laufzeit des Lichts verwenden. Zum Einsatz kommen diese in der Industrie für die Positionsbestimmung von Fahrzeugen, zur Kollisionsvermeidung, zur Objekterkennung und bei vielen weiteren Anwendungen.

Für diese Art der elektrooptischen dreidimensionalen Entfernungsmessgeräte wird vielfach der Begriff 3D-Sensor verwendet. Grundsätzlich geht es dabei um eine Entfernungsmessung vom Ort des Sensors zu einer abzubildenden Fläche oder Topographie. Welche Dimensionen die erfasste Fläche dabei haben soll, ist stark von der Anwendung abhängig.

Bei vielen optischen Sensoren wird eine Entfernungsmessung über ein unbewegliches Entfernungsmessmodul durchgeführt. Diese Entfernungsmessmodule bestehen dabei aus einer optischen Sende- und einer Empfangseinheit sowie einer Auswerteschaltung zum Bestimmen der gemessenen Distanz. Ausgesendete Lichtpulse treffen auf das zu messende Objekt und werden von diesem reflektiert. Das reflektierte Licht gelangt in die optische Empfangseinheit. Eine nachgelagerte Auswerteschaltung bestimmt aus der Zeit zwischen dem Aussenden des Pulses und dem Empfang des reflektierten Lichts die Laufzeit als Maß für die Entfernung.

Um die gewünschte 3D-Distanzmessung zu erreichen, können mehrere Empfangseinheiten mit einer einzelnen Sendeeinheit kombiniert werden, die in einen großen Raumwinkel abstrahlt. Die reflektierten Lichtpulse werden mit den Empfangseinheiten detektiert und durch die Abbildung der Empfangseinheiten auf eine Fläche auf dem Objekt kann diese Fläche in ihrer Entfernung zur Sendequelle in einzelne Pixel aufgelöst werden, wodurch eine räumliche Erfassung möglich wird. Die Detektion der einzelnen Entfernungspixel kann dabei stark durch Umgebungslicht beeinflusst werden, weil die Sendequelle flächig abstrahlt und daher pro Pixel nur geringe Nutzsignale pro Pixel zur Verfügung stehen. Weiterhin kann es durch die flächige Abstrahlung zu Reflektionen kommen, die wiederum das Messsignal verfälschen.

Bei einer weiteren Möglichkeit, eine 3D-Messung durchzuführen, werden mehrere Laserquellen verwendet, die jeweils Licht in Form einer Zeile aussenden. Das zeilenförmig ausgesendete Licht trifft auf das zu messende Objekt und wird von diesem reflektiert. Das wiederum zeilenförmig reflektierte Licht wird durch mehrere Empfangseinheiten detektiert. Durch die Abbildung der Empfangseinheiten auf der durch die Laserquellen beleuchteten Fläche kann diese in ihrer Entfernung zu den Sendequellen in einzelne Pixel aufgelöst werden, wodurch eine räumliche Erfassung möglich wird. Die Ortsauflösung ist also von der Anzahl der Empfangseinheiten abhängig und lässt sich nur mit erheblichen Aufwand und nur bis zu einem gewissen Maß steigern. Um eine gute Auflösung zu erreichen, ist eine Vielzahl von Sende- und Empfangseinheiten erforderlich.

Eine weitere Ausgestaltung zur dreidimensionalen Messung ist eine Kombination von bewegten Spiegeln und Sende- und Empfangseinheiten. Bekannt ist insbesondere die Kombination eines sogenannten 2D-MEM-Spiegels mit einer Laserquelle und einem PMD-Sensor (Photomischdetektor). Über den 2D-MEM-Spiegel erfolgt dabei eine vertikale Ablenkung einer strichförmig ausgebildeten Laserquelle. Mit einem PMD-Sensor wird die Abbildung der vertikal bewegten Laserlinie detektiert und über die Laufzeitmessung in Entfernungssignale umgewandelt. Weil die Ortsauflösung dabei über den PMD-Sensor erfolgt, entscheidet die Anzahl der auf dem PMD-Sensor befindlichen Messeinheiten über die mögliche Auflösung. Je höher die Auflösung gewählt wird, desto schlechter wird das Signal-zu-Rausch-Verhältnis und damit die mögliche Reichweite einer solchen Einrichtung.

Das Fraunhofer ISIT (https://www.isit.fraunhofer.de/de/mems-anwendungen/optischesysteme/3d-kamera.html) hat auf Basis eines 2D-MEMS-Scanners eine 3D-Kamera entwickelt, die das Prinzip der Phasendifferenz eines ausgesendeten Laserstrahls zum detektierten reflektierten Lictpuls als Entfernungsmessung verwendet.

Schließlich gibt es Kombinationen eines 2D-MEM-Spiegels mit einer einzigen Empfangseinheit. Der Einsatz eines 2D-MEM-Spiegel erlaubt eine Ablenkung einer Sendequelle sowohl in horizontaler als auch in vertikaler Richtung. Verwendet wird eine einzige Empfangseinheit, die den gesamten Bereich erfasst, die durch den mittels 2D-MEM-Spiegel abgelenkten Sendestrahl abgebildet wird. Durch eine Überwachung der Position des 2D-MEM-Spiegels ist hierbei eine Ortsauflösung möglich. Nachteilig an dieser Vorrichtung ist, dass eine solche Kombination nur für sehr geringe Öffnungswinkel des zu messenden Bereiches sinnvoll ist. Dabei ist zu berücksichtigen, dass die Empfängereinheit zwar jeweils das reflektierte Licht der gesamten abgebildeten Fläche erfasst, aber nur die Reflektion der, sinnvollerweise punktförmigen, Sendequelle als Nutzsignal zur Verfügung steht. Im Falle eines direkten Lichteinfalls in eine solche Empfängereinheit dürfte die Verwendbarkeit nahezu ausgeschlossen sein. Für industrielle Anwendungen scheint daher diese Vorrichtung nicht brauchbar zu sein.

Als eine Aufgabe der Erfindung kann angesehen werden, einen Sensor der oben angegebenen Art zu schaffen, der kostengünstig herstellbar ist und bei dem außerdem eine besonders große Raumwinkel überwacht werden können. Diese Aufgabe wird durch den Sensor mit den Merkmalen des Anspruchs 1 gelöst.

Der Sensor der oben angegebenen Art ist erfindungsgemäß dadurch weitergebildet, dass die Detektionseinheit zum Nachweisen von zurückgestrahlten Lichtpulsen aus unterschiedlichen Raumrichtungen mehrere Einzeldetektoren aufweist.

Bevorzugte Ausführungsbeispiele des erfindungsgemäßen Sensors werden im Folgenden, insbesondere im Zusammenhang mit den abhängigen Ansprüchen und den Figuren erläutert.

Als ein wesentlicher Gedanke der Erfindung kann angesehen werden, erstens den Aufwand und damit die Kosten gering zu halten, indem nur eine einzige Lichtquelle verwendet wird, die mit einer beweglichen strahlführenden Komponente, nämlich einem zweiachsigen Scanner, in unterschiedliche Richtungen in den Überwachungsbereich geleitet wird, und andererseits zum Nachweis der zurückgestrahlten Lichtpulse aus einem großen Raumwinkelbereich eine Mehrzahl von Einzeldetektoren zu verwenden.

Als ein wesentlicher Vorteil der Erfindung kann angesehen werden, dass der Sensor im Vergleich zu Lösungen des Stands der Technik bei hinreichender Ortsauflösung besonders kostengünstig herstellbar ist.

Für das Messprinzip kommt es nicht darauf an, ein optisches Bild des zu vermessenden Objekts auf den Einzeldetektoren zur erzeugen. Wichtig ist vielmehr, die zurückgestrahlten Lichtpulse oder das zurückgestrahlte Licht möglichst effektiv nachzuweisen, damit eine Bestimmung eines zu einer bestimmten Stellung der zweiachsigen Scaneinheit gehörenden Entfernungswerts mit gutem Signal-zu-Rausch-Verhältnis möglich ist. Unter dem Begriff des dreidimensionalen optischen Vermessens eines Objekts versteht man im Rahmen dieser Beschreibung, dass man durch die Zuordnung eines Entfernungswerts zu einer bestimmten Stellung der zweiachsigen Scaneinheit, charakterisiert im Prinzip durch zwei Winkelwerte, einen dreidimensionalen Koordinatenwert für einen Punkt auf der Oberfläche des zu vermessenden Objekts erhält. Als Punkt auf der Oberfläche des zu vermessenden Objekts wird dabei derjenige Flächenbereich auf der Oberfläche des Objekts bezeichnet, von dem der jeweils gemessene Lichtpuls oder Lichtstrahl zurückreflektiert wird.

Als Lichtsender zum Aussenden von Sendelichtpulsen können im Prinzip alle Lichtquellen verwendet werden, die das Licht im gewünschten Wellenlängenbereich und mit den gewünschten Intensitäten bereitstellen. Besonders bevorzugt werden Leuchtdioden, Halbleiterlaser oder VCSEL verwendet. Die Verwendung von UV-Licht ist prinzipiell möglich, bevorzugt wird aber sichtbares oder infrarotes Licht verwendet.

Damit eine hinreichende zweidimensionale Ortsauflösung erreicht wird, muss die Sendeoptik prinzipiell so gestaltet sein, dass die Lichtpulse auf dem zu vermessenden Objekt einen hinreichend kleinen Fleck beleuchten. Die Sendeoptik kann beispielsweise ein Kollimator sein, d. h. dass das divergente Strahlenbündel der Lichtquelle in ein im wesentlichen paralleles Strahlenbündel umgeformt wird.

Unter einem Einzeldetektor soll für die Zwecke der vorliegenden Erfindung ein einzelner Detektor verstanden werden, dessen Größe so dimensioniert ist, dass die räumliche Auflösung des Sensors gerade nicht durch die Größe einer aktiven Fläche des Einzeldetektors beschränkt ist. PMD-Sensoren werden nicht als Einzeldetektoren angesehen, weil dort eine Mehrzahl von Messeinheiten vorhanden ist. Als Einzeldetektoren können im Prinzip alle Komponenten verwendet werden, die das jeweils verwendete Licht mit einer hinreichenden Empfindlichkeit und Schnelligkeit nachweisen. Besonders bevorzugt kommen Halbleiterkomponenten, mithin Photodioden, zum Einsatz.

Mit dem Begriff einer zweiachsigen Scaneinheit wird eine Komponente verstanden, mit der die Richtung des Sendelichts in zwei voneinander unabhängigen Raumrichtungen variiert werden kann.

Als Steuer- und Auswerteeinheit zum Ansteuern des Lichtsenders und der Scaneinheit und zum Auswerten des von der Detektionseinheit nachgewiesenen Lichts, können im Prinzip Mikrocontroller oder vergleichbare intelligente, insbesondere programmierbare, Halbleiterkomponenten verwendet werden.

Prinzipiell ist es möglich, einen Entfernungswert zu bestimmen auf Grundlage eines gemessenen Phasenversatzes von ausgesandtem zu empfangenem Licht. Besonders bevorzugt ist die Steuer- und Auswerteeinheit aber dazu eingerichtet, einen von der Senderichtung abhängigen Entfernungswert auf Grundlage einer Laufzeit von Lichtpulsen zu bestimmen.

Eine konkrete Stellung der zweiachsigen Scaneinheit kann im Prinzip gemessen werden durch geeignete Winkelmesseinrichtungen. Prinzipiell ist es aber auch möglich, aus Ansteuerwerten für die zweiachsigen Scaneinheit die jeweiligen Winkelwerte abzuleiten. Prinzipiell können Kalibrierungskurven, die die Ansteuerwerte zu den zugehörigen tatsächlichen Winkelpositionen in Bezug setzen, vor Aufnahme eines Messbetriebs gemessen und eingelernt werden. Solche Kalibrierungsmessungen können auch nach einer bestimmten Zahl von Betriebsstunden wiederholt werden.

Grundsätzlich kann es sich bei den Einzeldetektoren um separate Komponenten handeln. Das kann dann zweckmäßig sein, wenn nur eine vergleichsweise geringe Anzahl von Einzeldetektoren verwendet wird, beispielsweise eine Anzahl kleiner als zehn. Bei einer besonders bevorzugten Variante des erfindungsgemäßen Sensors sind die Einzeldetektoren der Detektionseinheit in einem zweidimensionalen Array angeordnet. Die Einzeldetektoren können auch in einer integrierten Schaltung zusammengefasst sein. Beispielsweise kann die Detektionseinheit eine Mehrzahl von PIN-Dioden oder ein APD-Array aufweisen.

Grundsätzlich wird die Erfindung verwirklicht, wenn eine einzige Empfangsoptik, beispielsweise eine einzige Empfangslinse verwendet wird, mit welcher das von dem Objekt zurückgestrahlte Licht auf die Einzeldetektoren geleitet wird. Zum Überwachen eines größeren Raumwinkelbereichs kann es aber bevorzugt sein, wenn die Detektionseinheit mehrere Empfangsoptiken, z.B. mehrere nebeneinander angeordnete Linsen, aufweist.

Prinzipiell können die Empfangsoptiken und deren Positionierungen so gewählt werden, dass die von der jeweiligen Empfangsoptik kann abgedeckten Raumwinkelbereiche, die mit bestimmten Bereichen des zu vermessenden Objekts korrespondieren, unmittelbar benachbart sind. Um sicher zu gehen, dass alle Bereiche des zu vermessenden Objekts tatsächlich erfasst werden, können die Empfangsoptiken und deren Anordnung bevorzugt auch so gestaltet sein, dass die von den Empfangsoptiken erfassten Bereiche des Überwachungsbereichs überlappen.

Von Vorteil ist in diesem Zusammenhang auch, wenn die Empfangsoptiken und deren Anordnung so gestaltet sind, dass aus bestimmten Bereichen des Überwachungsbereichs zurückgestrahltes Licht von ein und derselben Empfangsoptik auf mehrere Einzeldetektoren geleitet wird.

Eine besonders vorteilhafte Ausgestaltung der zweiachsigen Scaneinheit weist einen einzigen Spiegel auf, der um zwei verschiedenen Achsen beweglich ist. Mit verschiedenen Achsen sind dabei insbesondere zwei aufeinander senkrecht stehende Achsen gemeint, um welche der Spiegel gedreht oder gekippt werden kann. Zum Feststellen einer tatsächlichen Stellung des Spiegels in den beiden Achsen können Messeinrichtungen, wie Winkelgeber, vorhanden sein, die ebenfalls von der Steuer- und Auswerteeinheit ausgewertet werden. Grundsätzlich ist aber auch möglich, die Stell oder Ansteuersignale für die beiden Achsen des Spiegels als Maß für dessen Winkelstellungen zu verwenden.

Den Einzeldetektoren oder Empfangselementen können jeweils separate Signalverstärker nachgeschaltet sein. Die verstärkten Signale der Empfangselemente können dann der Steuer- und Auswerteeinheit zugeführt werden. Durch diese Maßnahme kann die Steuer- und Auswerteeinheit entscheiden, welches der, beispielsweise 16, Signale ausgewertet werden soll. Diese Entscheidung kann die Steuer- und Auswerteeinheit anhand der jeweils über die Stellsignale oder die Messsignale von Winkelgebern bekannten Position der Scaneinheit treffen. Es wird jeweils nur ein Einzeldetektor ausgewählt, der zurückgestrahltes Licht aus demjenigen Raumbereich detektieren kann, in den zu diesem Zeitpunkt über die Scaneinheit Lichtpulse ausgesandt werden. Alle anderen Einzeldetektoren werden passiv gestellt. Passiv Stellen kann jede Maßnahme bedeuten, die bewirkt, dass eventuelle Messsignale dieser anderen Detektoren bei der Auswertung nicht berücksichtigt werden. Ein Abschalten dieser Detektoren ist also möglich, aber nicht notwendig. Durch diese Maßnahme wird das Signal-zu-Rausch-Verhältnis gegenüber einer Betrachtung des gesamten Sichtfeldes um den Faktor des Verhältnisses der Gesamtzahl der Einzeldetektoren zur Anzahl der ausgewerteten Detektoren (bei insgesamt 16 Detektoren und nur einem einzigen ausgewerteten Einzeldetektor also um den Faktor 16) verbessert.

Weil die Ortsauflösung im Wesentlichen durch die Genauigkeit der Spiegelposition begrenzt ist, kann die Auflösung, wenn notwendig, im Prinzip einfach durch Verwendung von qualitativ besseren Komponenten für die Scaneinheit gesteigert werden.

Der Spiegel der Scaneinheit kann beispielsweise durch einen zweiachsigen MEMS-Spiegel verwirklicht sein.

Grundsätzlich ist auch möglich, dass die Scaneinheit zwei Spiegel aufweist, die jeweils um eine einzige Achse beweglich sind. Zum Beispiel können zwei einachsige MEMS-Spiegel vorhanden sein.

Für die konkrete Form der Abtastung eines bestimmten Raumbereichs besteht im Prinzip große Freiheit. Beispielsweise kann der Raumbereich mäanderförmig oder in der Art von variierenden Lissajous-Figuren abgetastet werden. Bei anderen Varianten kann die Steuer- und Auswerteeinheit vorteilhaft zum Ansteuern der Scaneinheit dergestalt eingerichtet sein, dass die Senderichtung zeilenweise verändert wird.

In diesem Zusammenhang kann auch zweckmäßig sein, wenn die Scaneinheit mindestens einen resonanten Scanner aufweist. Dabei schwingt der Spiegel während des Abtastvorgangs in einer bestimmten festen Frequenz. Dieser Spiegel kann beispielsweise für das Scannen in einer Zeilenrichtung verwendet werden.

Ergänzend oder alternativ kann die Scaneinheit mindestens einen quasistatischen Scanner aufweist. Damit sind im Unterschied zu resonanten Scanner solche Scanner gemeint, bei denen eine bestimmte Winkelstellung angesteuert wird. MEMS-Spiegel sind sowohl als resonante Scanner wie auch als quasistatische Scanner verfügbar. Mögliche Scan-Frequenzen reichen dabei von ca. 0,1 kHz bis zu 50 kHz.

Das Sendelicht, insbesondere die Lichtpulse, werden durch eine Sendeoptik in geeigneter Weise so geformt, beispielsweise kollimiert oder gebündelt, dass sie auf einem zu vermessenden Gegenstand einen Leuchtfleck beleuchten. Damit eine gewünschte Ortsauflösung erreicht wird, muss dieser Leuchtfleck hinreichend klein sein. Es ist aber wichtig, festzustellen, dass es nicht auf eine Fokussierung im strengen optischen Sinn ankommt. Die zu beleuchtende Oberfläche muss sich also keineswegs in einer Brennebene der verwendeten Optik befinden. Wichtig ist nur, dass alle Punkte einer Oberfläche mit Leuchtflecken beleuchtet werden, die im wesentlichen überall dieselbe Größe haben.

Um möglichst für alle Punkte auf einer Oberfläche eines zu vermessenden Gegenstands gleiche Bedingungen zu erhalten, ist die Steuer- und Auswerteeinheit bevorzugt dazu eingerichtet, die Scaneinheit dergestalt anzusteuern, dass der Sendelichtstrahl und mithin der Leuchtfleck mit im wesentlichen konstanter Winkelgeschwindigkeit durch den insgesamt abgetasteten Raumwinkelbereich geführt wird. Weil die Verweildauer des Sendelichtstrahls auf jedem Punkt einer Oberfläche eines zu vermessenden Objekts dann im Wesentlichen für alle Punkte dieselbe ist, wird dadurch erreicht, dass jeder Punkt (bei zeitlich konstanter Intensität des Sendelichtstrahls) auf der Oberfläche pro Durchlauf im Wesentlichen mit derselben Lichtmenge beaufschlagt wird. Das ist jedenfalls dann der Fall, wenn der Einfallswinkel des Sendelichtstrahls auf der Oberfläche für alle Punkte nicht sehr weit vom senkrechten Einfall abweicht. Wenn das Rückstrahlungsvermögen (insbesondere durch Streuung) der Oberfläche überall etwa gleich groß ist, wird das Signal-zu-Rausch-Verhältnis dann für alle gemessenen Punkte vorteilhafterweise etwa gleich groß.

Eine konstante Verweildauer des Sendelichtstrahls auf den beleuchteten Punkten erhält man typischerweise nicht bei zeilenartiger Abtastung des Raumbereichs und Verwendung eines resonanten Scannerspiegels für die Bewegung in der Zeilenrichtung. Die Verweildauer der Leuchtflecke ist vielmehr in den Umkehrpunkten der Spiegeloszillation minimal und in den Nulldurchgängen der Spiegeloszillation maximal.

Weitere Vorteile und Eigenschaften des erfindungsgemäßen Sensors werden mit Bezug auf die beigefügten Figuren erläutert. Darin zeigt:
- Figur 1:: eine schematische Ansicht eines Ausführungsbeispiels des erfindungsgemäßen Sensors;
- Figur 2:: eine schematische Ansicht einer Detektionsanordnung für einen gattungsgemäßen Sensor nach dem Stand der Technik;
- Figur 3:: eine schematische Ansicht einer ersten Variante einer Detektionsanordnung für einen erfindungsgemäßen Sensor; und
- Figur 4:: eine schematische Ansicht einer zweiten Variante einer Detektionsanordnung für einen erfindungsgemäßen Sensor.

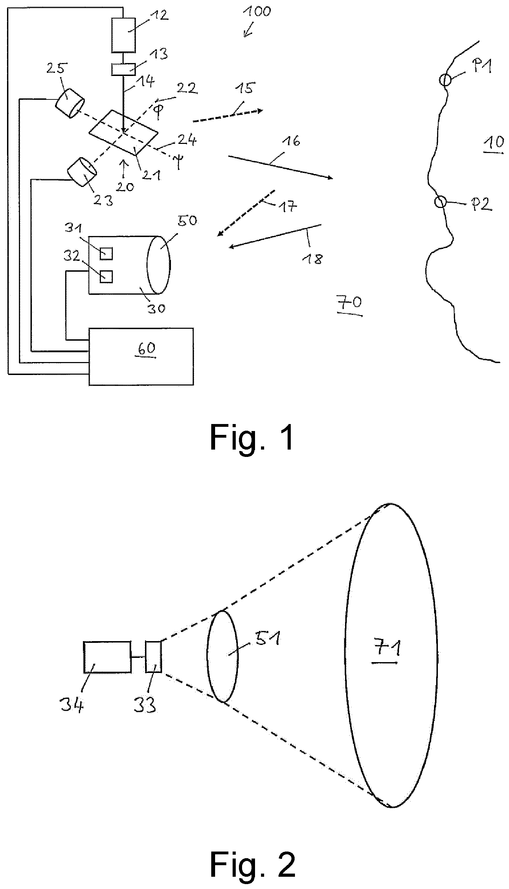

Das in Figur 1 dargestellte Ausführungsbeispiel eines erfindungsgemäßen Sensors 100 zum dreidimensionalen optischen Vermessen eines Objekts 10 in einem Überwachungsbereich 70 weist als wesentliche Komponenten ein Lichtsender 12, eine Detektionseinheit 30, eine zweiachsige Scaneinheit 20 und eine Steuer- und Auswerteeinheit 60 auf.

Der Lichtsender 12 sendet Sendelichtpulse 14 aus, die über eine strahlformende Optik 13 auf die zweiachsige Scaneinheit 20 gelangen, die strahlabwärts von dem Lichtsender 12 angeordnet ist. Die strahlformende Optik 13, beispielsweise ein Kollimator, dient dazu, die Lichtpulse 14 so zu formen, dass sie hinreichend kleine Leuchtflecke auf der zu untersuchenden Probe 10 im Überwachungsbereich 70 beleuchten. Die Scaneinheit 20 dient zum Lenken der Sendelichtpulse 14 in unterschiedliche Senderichtungen in den Überwachungsbereich. In dem in Figur 1 schematisch gezeigten Beispiel ist die zweiachsigen Scaneinheit 20 als Spiegel 21 verwirklicht, der um zwei, insbesondere zueinander senkrechte, Achsen 22, 24 drehbar oder verkippbar ist. Die zugehörigen Drehwinkel sind mit ϕ und ψ bezeichnet. Zum Ansteuern der Winkelstellung des Spiegels 21 bezüglich der Achse 22 ist eine Einrichtung 23, insbesondere ein Aktor, vorhanden. Zum Ansteuern der Winkelstellung des Spiegels 21 bezüglich der Achse 24 ist eine Einrichtung 25, insbesondere ein Aktor, vorhanden. Die Einrichtungen 23 und/oder 25 können außerdem Messeinrichtungen zum Messen der jeweiligen Winkelstellung ϕ und ψ enthalten. Der Spiegel 21 kann beispielsweise ein zweiachsiger MEMS-Spiegel sein.

Beispielhaft sind in Figur 1 zwei Sendelichtpulse 15 und 16 gezeigt, die durch die Scaneinheit 20 in unterschiedliche Richtungen in den Überwachungsbereich 70 geleitet werden. Aus Gründen der Darstellung befinden sich beide Richtungen in der Papierebene. Weil es sich um eine zweiachsige Scaneinheit handelt und, im gezeigten Beispiel, der Spiegel 21 um zwei Achsen verschwenkt werden kann, ist aber klar, dass die Sendepulse auch in unterschiedliche Richtungen senkrecht zur Papierebene in den Überwachungsbereich 70 ausgesendet werden können.

In der in Figur 1 schematisch gezeigten Situation treffen die Sendepulse 15 und 16 auf die Punkte P1 beziehungsweise P2 auf der Probe 10. Der vom Punkt P1 reflektierte Lichtpuls ist mit dem Bezugszeichen 17, der vom Punkt P2 reflektierte Lichtpuls mit dem Bezugszeichen 18 gekennzeichnet.

Die zurückreflektierten Lichtpulse 17, 18 gelangen über eine Empfangsoptik 50 auf die beiden Einzeldetektoren 31, 32 in der Detektionseinheit 30.

Die Steuer- und Auswerteeinheit 60, beispielsweise ein Mikrocontroller, dient zum Ansteuern des Lichtsenders 12 und der Scaneinheit 20 und zum Auswerten der von der Detektionseinheit 30 nachgewiesenen Lichtpulse 17, 18. Besonders bevorzugt wird auf Grundlage einer Laufzeit der Lichtpulse, also der Differenz zwischen einem Empfangszeitpunkt t2 in einem der Detektoren 31 oder 32 und dem jeweils zugehörigen Aussendezeitpunkt t1 unter Verwendung der Lichtgeschwindigkeit c in dem Medium (üblicherweise Luft) ein Abstand d des betreffenden Punkts P1, P2 relativ zum Sensor 100 bestimmt nach dem Zusammenhang d=0,5*(t2-t1)/c. Prinzipiell ist aber auch möglich, einen Phasenversatz zwischen einer ausgesendeten Lichtwelle und empfangenen Lichtwelle zu messen und damit die Entfernung zu bestimmen. Mit dem Entfernungswert d und der Richtungsinformation, die man aus der Ansteuerung des Spiegels 21 oder aus der Messung der tatsächlichen Winkelstellungen ϕ, ψ relativ zu den beiden Achsen 22 und 24 erhält, gewinnt man eine 3D-Information. Die Gesamtheit der Messwerte (d, ϕ, ψ) liefert im Ergebnis eine Topographie der Oberfläche des Objekts 10. Durch geeignete Auswertung dieser Daten, etwa mit Bildanalysealgorithmen, können beispielsweise zuvor eingelernte Objekte erkannt werden.

Fig. 2 zeigt eine Anordnung eines Einzeldetektors 33 mit einem nachgeschalteten Signalverstärker 34 und einer Empfangsoptik (Empfängerlinse) 51 nach dem Stand der Technik. Der Raumwinkelbereich 71, aus dem mit dem Einzeldetektor 33 Lichtpulse nachgewiesen werden können, ist dabei vergleichsweise klein.

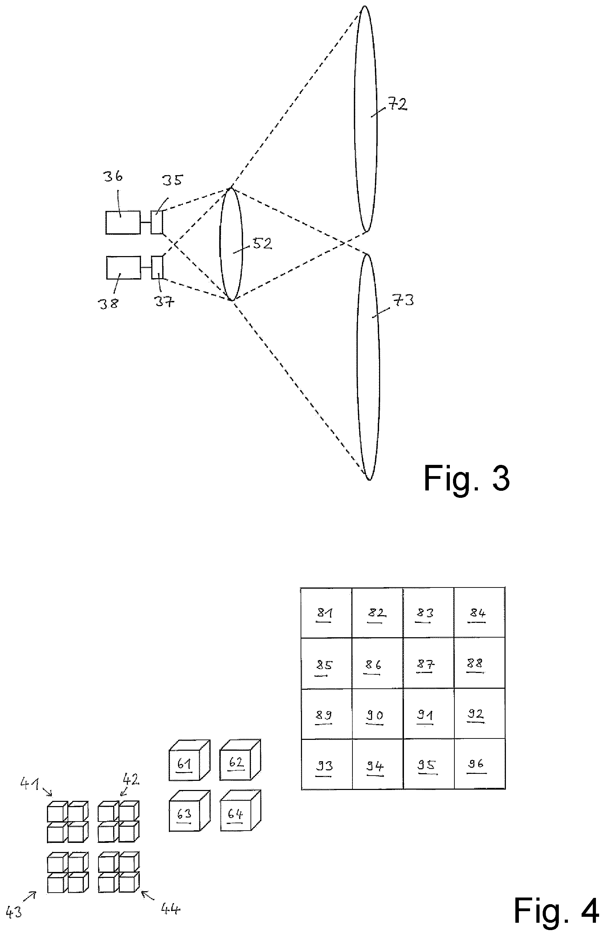

Die mit der Erfindung erzielte Verbesserung wird anhand der schematischen Darstellung in Figur 3 erläutert. Dort sind zwei Einzeldetektoren 35, 37 mit zugeordneten Signalverstärkern 36 beziehungsweise 38 vorhanden. Nachzuweisendes Licht gelangen aus den Raumwinkelbereichen 72, 73 über eine gemeinsame Empfangsoptik 52 auf die beiden Einzeldetektoren 35, 37. Durch die vergleichsweise einfache Maßnahme, einen zweiten Einzeldetektor zu verwenden, kann im Wesentlichen eine Verdopplung des erfassten Raumwinkelbereiche erreicht werden, ohne dass die Empfangsoptik aufwändig vergrößert werden muss. Bevorzugt wird man aber die Empfangsoptik 52 und die Einzeldetektoren 35, 37 so dimensionieren und relativ zueinander anordnen, dass die erfassten Raumwinkelbereiche 72, 73 entweder direkt aneinandergrenzen oder bevorzugt überlappen.

Fig. 4 zeigt schematisch den prinzipiellen Aufbau eines Detektors mit vier Empfangsoptiken 61-64 (beispielsweise jeweils Empfängerlinsen), 16 Empfangselementen und die jeweils erfassten Raumwinkelbereiche 81-96. Die Empfangselemente sind jeweils in Vierergruppen 41, 42, 43, 44 zusammengefasst. Beispielsweise kann es sich um Detektorarrays handeln. Von den Empfangsoptiken 61, 62, 63 und 64 kommendes Licht wird von den Einzeldetektoren der Vierergruppe 41, 42, 43 beziehungsweise 44 nachgewiesen. In diesem Sinn ist jeweils eine der Empfangsoptiken 61-64 einer der Vierergruppen 41-44 zugeordnet.

Aus mechanischen Gründen können die Empfangselemente nicht lückenlos aneinandergereiht werden. Dies lässt der mechanische Aufbau der Empfangselemente nicht zu. Um dennoch in der Abbildung keine Lücken entstehen zu lassen, wird die Anordnung der Empfangselemente so gewählt, dass sich die Abbildung der einzelnen Linsen gegenseitig ergänzt und gemeinsam ein zusammenhängendes Bild ergibt. Alternativ ist es auch möglich, die Empfangselemente auf einem IC zusammenzufassen und damit die Abstände zwischen den jeweiligen optisch wirksamen Flächen soweit zusammenzuführen, dass die Lücken zwischen den Einzeldetektoren vernachlässigt werden können.

Von der Empfangsoptik 61 werden die Elemente 81-83, 85-87 und 89-91 des gesamtem Raumwinkelbereichs erfasst.

Von der Empfangsoptik 62 werden die Elemente 82-84, 86-88, 90-92 des gesamtem Raumwinkelbereichs erfasst.

Von der Empfangsoptik 63 werden die Elemente 85-87, 89-91, 93-95 des gesamtem Raumwinkelbereichs erfasst.

Die Empfangsoptik 64 schließlich erfasst die Elemente 86-88, 90-92 und 94-96 des gesamtem Raumwinkelbereichs.

Die von den Empfangsoptiken 61-64 jeweils erfassten Teilbereiche des gesamten Raumwinkelbereiche überlappen also. Jeder Teilbereich wird von mindestens Empfangsoptiken erfasst. Die Messdaten sind deshalb redundant. Diese redundanten Messdaten können beispielsweise Plausibilitätstests unterzogen werden. Prinzipiell können jeweils zusammengehörige Messdaten addiert werden, wodurch das Signal-zu-Rausch-Verhältnis gesteigert wird.

Durch die Anordnung der Figur 4 kann ein lückenloses Empfangssichtfeld mit großer Winkelöffnung erreicht werden. Durch die Aufteilung auf, im Beispielfall 16, Empfangseinheiten mit jeweils nachgeschalteten Signalverstärkern kann das Signal-zu-Rausch-Verhältnis mit einfachen Mitteln gesteigert werden.

### Bezugszeichenliste

- 10: Objekt
- 12: Lichtsender
- 13: Sendeoptik
- 14: Sendelichtpulse
- 15: Sendelichtpuls (erste Richtung)
- 16: Sendelichtpuls (zweite Richtung)
- 17: von P1 zurückgestrahlter Lichtpuls (korrespondierend zu Sendelichtpuls 15)
- 18: von P2 zurückgestrahlter Licht wird (korrespondierend zu Sendelichtpuls 16)
- 20: zweiachsige Scaneinheit
- 22: erste Kippachse
- 23: Aktor/Messgerät für erste Kippachse 22
- 24: zweite Kippachse
- 25: Aktor/Messgerät für zweite Kippachse 24
- 30: Detektionseinheit
- 31: Einzeldetektor
- 32: Einzeldetektor
- 33: Einzeldetektor
- 34: Vorverstärker für Einzeldetektor 33
- 35: Einzeldetektor
- 36: Vorverstärker für Einzeldetektor 35
- 37: Einzeldetektor
- 38: Vorverstärker für Einzeldetektor 37
- 41: Gruppe von 4 Einzeldetektoren
- 42: Gruppe von 4 Einzeldetektoren
- 43: Gruppe von 4 Einzeldetektoren
- 44: Gruppe von 4 Einzeldetektoren
- 50: Detektionsoptik (Linse)
- 51: Detektionsoptik (Linse)
- 52: Detektionsoptik (Linse)
- 60: Steuer- und Auswerteeinheit
- 61: Detektionsoptik (Linse) für Gruppe 41
- 62: Detektionsoptik (Linse) für Gruppe 42
- 63: Detektionsoptik (Linse) für Gruppe 43
- 64: Detektionsoptik (Linse) für Gruppe 44
- 70: Überwachungsbereich
- 71: Teilbereich des Überwachungsbereichs 70
- 72: Teilbereich des Überwachungsbereichs 70
- 73: Teilbereich des Überwachungsbereichs 70
- 81-96: Teilbereiche des Überwachungsbereichs 70
- 100: Sensor
- P1: erster Punkt auf Objekt 10
- P2: zweiter Punkt auf Objekt 10
- ϕ: Winkelstellungen von Scaneinheit 20 relativ zu Achse 22
- ψ: Winkelstellungen von Scaneinheit 20 relativ zu Achse 24

## Patentansprüche

1. Sensor zum dreidimensionalen optischen Vermessen eines Objekts in einem Überwachungsbereich
mit einem Lichtsender (12) zum Aussenden von Sendelichtpulsen (14, 15, 16), mit einer Detektionseinheit (30) zum Nachweisen von aus dem Überwachungsbereich (70) von einem zu vermessenden Objekt (10, P1, P2) zurückgestrahlten Lichtpulsen (17, 18),
wobei zum Lenken der Sendelichtpulse (14) in unterschiedliche Senderichtungen (15, 16) eine dem Lichtsender (12) nachgeordnete zweiachsige Scaneinheit (20) vorhanden ist,
und mit einer Steuer- und Auswerteeinheit (60) zum Ansteuern des Lichtsenders (12) und der Scaneinheit (20) und zum Auswerten der von der Detektionseinheit (30) nachgewiesenen Lichtpulse (17, 18),
**dadurch gekennzeichnet,**
**dass** die Detektionseinheit (30) zum Nachweisen von zurückgestrahlten Lichtpulsen aus unterschiedlichen Raumrichtungen (17, 18) mehrere Einzeldetektoren (31, 32; 35, 37) aufweist.

2. Sensor nach Anspruch 1,
**dadurch gekennzeichnet,**
**dass** die Steuer- und Auswerteeinheit (60) eingerichtet ist zum Bestimmen eines von der Senderichtung (15, 16) abhängigen Entfernungswerts (d) auf Grundlage einer Laufzeit der Lichtpulse (15, 16; 17, 18).

3. Sensor nach Anspruch 1 oder 2,
**dadurch gekennzeichnet,**
**dass** die Einzeldetektoren (41-44) der Detektionseinheit (30) in einem zweidimensionalen Array angeordnet sind.

4. Sensor nach einem der Ansprüche 1 bis 3,
**dadurch gekennzeichnet,**
**dass** die Detektionseinheit (30) eine Mehrzahl von PIN-Dioden oder ein APD-Array aufweist.

5. Sensor nach einem der Ansprüche 1 bis 4,
**dadurch gekennzeichnet,**
**dass** die Detektionseinheit (30) mehrere Empfangsoptiken (61-64) aufweist.

6. Sensor nach Anspruch 5,
**dadurch gekennzeichnet,**
**dass** die von den Empfangsoptiken (61-64) erfassten Bereiche (81-96) des Überwachungsbereichs (70) überlappen.

7. Sensor nach nach einem der Ansprüche 1 bis 6,
**dadurch gekennzeichnet,**
**dass** die Einzeldetektoren (41-44) in einer integrierten Schaltung zusammengefasst sind.

8. Sensor nach nach einem der Ansprüche 1 bis 7,
**dadurch gekennzeichnet,**
**dass** aus bestimmten Bereichen (72, 73) des Überwachungsbereichs (70) zurückgestrahlte Lichtpulse (17, 18) von ein und derselben Empfangsoptik (52) auf mehrere Einzeldetektoren (35, 37) geleitet werden.

9. Sensor nach einem der Ansprüche 1 bis 8,
**dadurch gekennzeichnet,**
**dass** die Sendeeinheit (12) eine Leuchtdiode, einen Halbleiterlaser oder einen VCSEL aufweist.

10. Sensor nach einem der Ansprüche 1 bis 9,
**dadurch gekennzeichnet,**
**dass** die Scaneinheit (20) einen einzigen Spiegel (21) aufweist, der um zwei verschiedenen Achsen (22, 24) beweglich ist.

11. Sensor nach einem der Ansprüche 1 bis 10,
**dadurch gekennzeichnet,**
**dass** die Scaneinheit zwei Spiegel aufweist, die jeweils um eine einzige Achse beweglich sind.

12. Sensor nach einem der Ansprüche 1 bis 11,
**dadurch gekennzeichnet,**
**dass** die Scaneinheit mindestens einen resonanten Scanner und/oder mindestens einen quasistatischen Scanner aufweist.

13. Sensor nach einem der Ansprüche 1 bis 12,
**dadurch gekennzeichnet,**
**dass** die Scaneinheit (30) mindestens einen MEMS-Spiegel aufweist.

14. Sensor nach einem der Ansprüche 1 bis 13,
**dadurch gekennzeichnet,**
**dass** die Steuer- und Auswerteeinheit (60) eingerichtet ist zum Ansteuern der Scaneinheit (20) dergestalt, dass die Senderichtung zeilenweise verändert wird.

15. Sensor nach einem der Ansprüche 1 bis 14,
**dadurch gekennzeichnet,**
**dass** die Steuer- und Auswerteeinheit (60) dazu eingerichtet ist, die Scaneinheit (20) dergestalt anzusteuern, dass der Sendelichtstrahl mit im wesentlichen konstanter Winkelgeschwindigkeit durch einen insgesamt abgetasteten Raumwinkelbereich geführt wird.

16. Sensor nach einem der Ansprüche 1 bis 15,
**dadurch gekennzeichnet,**
**dass** die Steuer- und Auswerteeinheit (60) abhängig von einer momentanen Stellung der Scaneinheit (20) jeweils mindestens einen Einzeldetektor aktiv stellt, der zurückgestrahltes Licht aus demjenigen Raumbereich detektieren kann, in den zu diesem Zeitpunkt über die Scaneinheit (20) Lichtpulse ausgesandt werden, und alle anderen Einzeldetektoren passiv stellt.
